# EUROPEAN PATENT SPECIFICATION

(11) **EP 0 900 345 B1**
(45) Date of publication and mention of the grant of the patent: **22.08.2007**
(21) Application number: 97927775.3
(22) Date of filing: 27.05.1997
(51) Int. Cl.: B65B 37/00, B65B 57/14, G05D 9/12

(54) **A FILL SYSTEM CONTROL APPARATUS**
FÜLLKONTROLLVORRICHTUNG
APPAREIL DE COMMANDE DE SYSTEME DE REMPLISSAGE

(30) Priority: 30.05.1996 US 18661 P
(43) Date of publication of application: 10.03.1999
(73) Proprietor: Tetra Laval Holdings & Finance SA, 1009 Pully (CH)
(72) Inventor: ANDERSSON, Bengt, S., Buffalo Grove, IL 60089 (US); FRANKE, Richard, S-240 10 Dalby (SE); BRANDSTROM, Per, S-450 46 Hunnebostrand (SE); HEGARDT, Johan, Buffalo Grove, IL 60089 (US)
(74) Representative: Forsberg, Lars-Ake
(86) International application number: PCT/US1997/008990
(87) International publication number: WO 1997/045664

(56) References cited:
- EP-A- 0 478 032
- GB-A- 755 694
- US-A- 3 876 037
- US-A- 3 887 110
- US-A- 4 095 920
- US-A- 4 728 005

## Description

### BACKGROUND ART

The present invention relates to an apparatus for accurately controlling the inflow to and outflow from a balance tank of a filling machine. More particularly, the present invention relates to an apparatus for monitoring and controlling the inflow of a particular fluid into a balance tank of a filling machine to provide a more consistent flow of fluid from the balance tank for use in filling packages.

During the filling process of packages in the filling machine, a certain amount of product fluid is pumped out of a balance tank at various invervals to fill packages with a set amount of the fluid. In order to keep supply of product fluid in the balance tank at a sufficient level for the continuous filling of packages, a holding tank at a dairy facility or the like is connected to the balance tank by a product line allowing fluid to be pumped to the balance tank. Accurately controlling the inflow of fluid into the balance tank of a filling machine has been the subject of various development efforts. Additionally, providing a quick and effective method for cleaning the balance tank and other apparatus for an efficient change over to a different fluid has also been the subject of development efforts.

Various methods and apparatus have been used to control and monitor the inflow rate of fluid into a balance tank in an effort to achieve equal inflow and outflow rates. For example, it is known to use a float valve at the inlet to the balance tank which is mechanically connected to a flow control valve. When the level of fluid in the tank drops below a predetermined level, the float valve opens to allow more fluid to flow in from the dairy through the product line. When sufficient fluid is in the tank, such as when the filling process is complete, the inflow of fluid raises the float up to or beyond the predetermined level and the valve mechanically closes, thus preventing any additional flow of fluid into the tank from the dairy.

However, as these prior systems attempted to keep the inflow into the tank equalling the outflow from the tank, the valve was constantly open and the fluid was flowing in at a constant. The rate of the fluid flowing into these prior tanks could not be controlled and tended to cause foaming of the fluid in the balance tank. The foaming of the fluid is similar to how orange juice foams when it is shaken too hard. This foam in the balance tank would ultimately be pumped out of the tank and into the packages thereby causing inaccuracies in the filling process of the packages. An additional disadvantage of the prior method and apparatus was that it had to be cleaned manually.

Another prior method involved electrically connecting a valve located at the inlet to the balance tank to a two-sensor probe. The probe operated by sensing a maximum fill level and a minimum fill level. When the first sensor detected that the fluid level in the tank was at the minimum level, the valve would be automatically opened to allow fluid to flow in and fill the tank. When the second sensor detected that the tank had been filled to the maximum level, the valve would be automatically closed preventing further egress of fluid into the tank.

This valve system of this prior method did not provide uniform flow into the balance tank. In the position where the valve was fully open, it would allow the fluid to flow in at such a rate as to cause foaming of the fluid in the balance tank and thus inaccurate filling of the packages, as discussed above.

Additionally, the use of a two-step valve was known in the art. In one position, the valve provided for a low inflow rate into the balance tank. In the other position, the valve would be fully opened allowing for a much larger inflow rate of fluid into the balance tank. None of these prior art systems provided for a fully automatic filling system with feedback control that provided the requisite filling accuracy. Additionally, none of these systems provided for the capability of automatic cleaning of the system.

### OBJECTS OF THE INVENTION

It is a primary object of the present invention to provide a filling system for continuously controlling the rate of inflow of filling fluid into a filling machine.

It is a further object of the present invention to provide a filling system that minimizes the risk of foaming and product degradation.

It is yet a further object of the present invention to provide a filling system that is compatible with various types of filling fluids.

These and other objects are attained according to the present invention as claimed.

The disclosed apparatus is suitable for use with both standard dairy products such as milk and pressure-sensitive products such as yogurt that are sensitive to pressure increases that may occur at the product valve. An operator panel is preferably included for selection of either a standard fluid or a pressure-sensitive fuid. The operator panel may be located either locally at the filling machine or at a location remote from the filling machine.

### BRIEF DESCRIPTION OF THE DRAWINGS

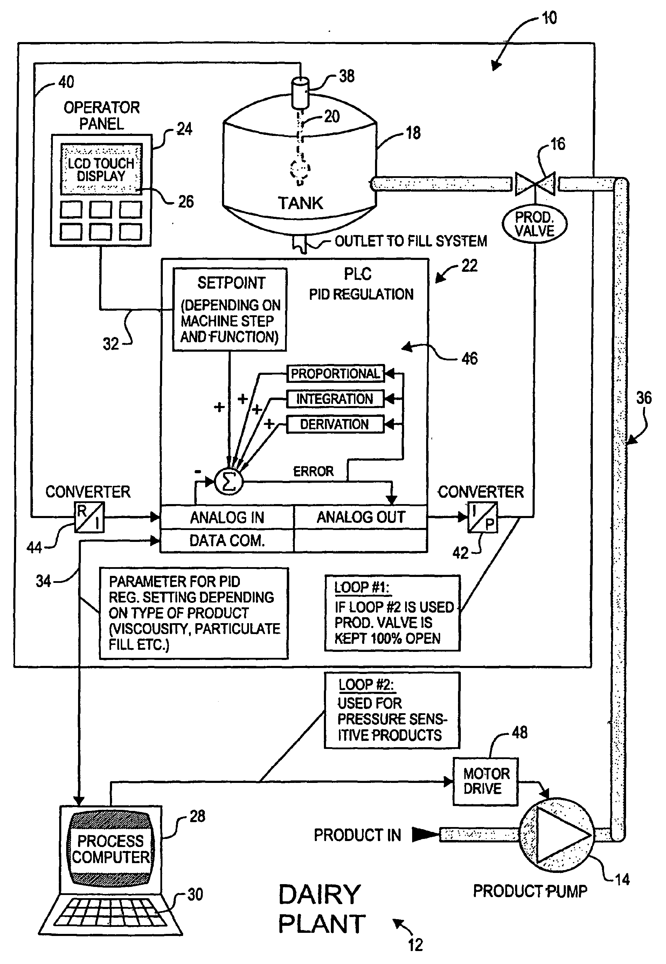

Fig. 1 illustrates a schematic drawing of a filling machine according to the present invention.

### BEST MODES FOR CARRYING OUT THE INVENTION

Referring to FIG. 1, a filling system is schematically illustrated. The filling system includes a dairy plant generally indicated by reference number 12, a product pump 14, a product valve 16, a balance tank 18, a level probe 20 located within the balance tank 18, and a PLC 22. An operator panel 24 is associated with the filling machine 10 allowing an operator to select the type of product to be filled. The operator panel 24 preferably includes a selection switch 26 allowing for the selection of various types of filling products. The selection switch is preferably an area or an icon on a LCD touch display which when touched communicates the type of product to be filled to the PLC 22. Alternatively, the selection switch may be any commercially available switch. A process computer 28 is also preferably included at the dairy plant to allow a customer to select the type of product to be transferred from the dairy plant to the filling machine 10 by entering the selection on the computer keyboard 30.

The preferred filling machine 10 is designed to accommodate two main types of filling products. In one embodiment, the filling machine 10 fills packages with standard products such as milk or juice. In another embodiment, the filling system 10 fills packages with pressure sensitive products such as yogurt or the like. The pressure sensitive products are preferably handled in the filling process differently than the standard products because, if subjected to extreme pressures, the pressure sensitive product tends to degrade.

In one embodiment shown in Figure 1, the filling machine 10 is configured for filling packages with a standard filling product. Once a standard product has been selected for filling by the entry of such information into the operator panel 24 or the process computer 28, the filling product selection is transmitted to the PLC 22 via electrical path 32 or 34, respectively. The PLC 22 then sends an analog signal to the process computer at the dairy via electrical path 34 to initiate the transfer of filling fluid from the dairy to the balance tank 18. At the beginning of the filling process, the filling fluid is transferred from the dairy via the product pump 14 through a product line 36 to the balance tank 18 at, for example, a rate of approximately one liter per second. The rate of the product pump 14 is preferably controlled by the PLC 22 and this slow fill up rate improves the accuracy of the filling process by preventing initial foaming of the fluid in the balance tank 18. Initially, the product valve 16 is fully open to allow the inflow of fluid into the tank 18. As shown in Figure 1, the product valve 16 is located in the product line 36 at or near the inlet to the balance tank 18. Thereafter, the rate of filling fluid into the tank 18 equals the rate of fluid out of the tank 18. The preferred flow of fluid from the tank 18 is six thousand liters per hour; however, this is dependent upon the filling rate at which the machine is operated.

The level probe 20 is affixed to the top 38 of the balance tank 18 and continuously monitors the level of fluid in the tank 18. This information regarding fluid level in the tank 18 is transferred to the PLC 22 via electrical connection 40 for processing. When the level probe 20 sends a signal to the PLC 22 that the fluid level in the balance tank 18 is either too high or too low, the PLC 22, via a current/pressure (I/P) converter 42, changes the position of the product valve 16 to account for the low or high level of filling fluid in the tank 18. If too much fluid is in the balance tank 18, the product valve 16 is closed by a certain amount by the PLC 22 to restrict the inflow of fluid into the balance tank 18. Conversely, if there is not enough filling fluid in the balance tank 18 the product valve 16 will be opened further by the PLC 22 to increase the inflow of fluid. The preferred I/P converter 42 is any commercially available I/P converter with an accuracy of about one percent. Additionally, the converter 42 is preferably pneumatically powered.

During the filling process, a separate pump (not shown) pumps filling fluid out of the balance tank 18 for use in filling packages. Depending upon the rate at which the fluid flows out of the balance tank 18, the level probe 20 will cause the PLC 22 to change the opening of the product valve 16, via the pneumatic I/P converter 42, to increase or decrease the amount of fluid flowing into the balance tank 18. To further enhance the accuracy of the filling an R/I converter 44 prior to being delivered to the PLC 22 amplifies process, the analog signal in line 40 from the probe 20.

In the preferred embodiment, the PLC 22 is any commercially available PLC with a standard proportional integrated derivative (PID0 loop added thereto. The PID loop generally indicated by reference number 46, functions to control the output of fluid from the balance tank 18 and also maintain a relatively constant level of fluid in the balance tank 18. PID loops are known in the art and operate based on certain parameters that are dictated by the type of product selected, its viscosity and other factors. Based on these parameters and a standard PID template, one of skill in the art could readily program the PID to operate within the parameters disclosed herein. The probe 20 is preferably a KHBLER probe and the amplifier 44 is also preferably a KHBLER converter.

In another embodiment shown in Figure 1, the filling system 10 is configured for filling packages with a pressure sensitive product. Once a pressure sensitive product has been selected for filling by the entry of such information into the operator panel 24, or the process computer 28, the filling product selection is transmitted to the PLC 22 via electrical connection 32 or 34, respectively. When the PLC 32 receives a signal from the operator panel 24 that a pressure sensitive product has been selected for filling, it sends an analog signal to the process computer 28 via electrical path 34. The process computer 28 is preferably located at the diary plant but may also be located at any other convenient location. The process computer 28 then signals a motor drive 46 to drive the product pump 14 at the proper rate to pump filling product from the dairy. The filling product from the holding tank at the dairy (not shown) is initially pumped, at a predetermined rate, through the product pipe 36, through the product valve 16, to the balance tank 18. In the preferred embodiment, the product pump 124 is a positive pressure pump so that when the pressure sensitive fluids are transferred to the balance tank 18 for use in the filling process they will not be subjected to excessive pressure and damaged. The product pump may be any commercially available positive pressure pump, including, a diaphragm pump or a screw pump.

In this embodiment, unlike when a standard product is being used to fill packages, the product valve 16 preferably remains fully open at all times. Again, this is to prevent the pressure sensitive product from being damaged from excessive pressure. The flow of the pressure sensitive fluid is controlled by regulating the speed of the motor drive 48 that drives the product pump 14 via the process computer 28 instead of by changing the position of the product valve 16. The product valve 16 may be any commercially available valve. Alternatively, the valve may be modified such that it is cone shaped and alleviates any squeezing of the product.

In this latter embodiment, the product valve 16 preferably remains fully open allowing the pressure sensitive product to be pumped via product pump 14 through the product pipe 36, directly into the balance tank 18. The level probe 20 in the balance tank 18 monitors the level of the filling product in the tank 18 and continuously transmits the indication of the product level to the PLC 22. The PLC 22, through the PID loop 46, then determines at what speed the motor drive 48 should drive the product pump 14.

Depending upon what type of fluid is being used to fill packages, the PLC 22 is either controlling an analog operated pneumatic valve 42 which controls the product valve 16, or fully opening the product valve 16 (closing only in emergency cases) and sending an analog signal via electrical path 34 to the dairy for controlling the speed of the product pump 14. In either embodiment, because the filling machine 10 is part of a purely electrical control loop, the filling machine 10 will operate with a much higher degree of accuracy than prior machines.

Additionally, for hygiene purposes, filling machines are typically cleaned both on a daily basis and between runs. Again, because the filling machine 10 is part of a purely electrical control loop, the embodiments of the present invention provide the added advantage of an entirely automated cleaning system, as opposed to the prior mechanical cleaning processes.

## Claims

1. A product packaging machine (10) for dispensing a liquid product into a container comprising a balance tank (18) for storing the liquid product before filling into said container through a filling system, the balance tank (18) having a level probe (20) for providing an output signal to a controller (22), said output signal being indicative of the level of the product in the balance tank (18), said controller (22) providing an input signal in response to said output signal, the balance tank (18) receiving product pumped from a product source by a product pump (14) through a valve mechanism (16), said valve mechanism (16) being adjusting an opening through which the product flows to the balance tank (18) in response to said input signal, the product pump (14) controlling the flow rate of the product in response to said input signal, **characterized in that** the controller (22) is adapted to accept the output signal of the level probe (20) and generate the input signal, said input signal being indicative of the speed at which the product pump (14) is to operate to provide product to the balance tank (18), the input signal being sent to a process computer (28) that sends a signal to the product pump (14) to control the speed of the product pump (14) in response to the input signal from the level probe (20) to the controller (22).

## Patentansprüche

1. Produktverpackungsmaschine (10) zur Abgabe eines flüssigen Produkts in einen Behälter, umfassend einen Ausgleichsbehälter (18) zum Aufbewahren des flüssigen Produkts vor dem Einfüllen in den Behälter durch ein Füllsystem, wobei der Ausgleichsbehälter (18) eine Füllstandssonde (20) hat, um eine Ausgabesignal an eine Steuereinheit (22) abzugeben, wobei das Ausgangssignal bezeichnend ist für den Füllstand des Produkts in dem Ausgleichsbehälter (18), wobei die Steuereinheit (22) ein Eingangssignal in Reaktion auf das Ausgangssignals liefert, wobei der Ausgleichsbehälter (18) das Produkt durch Pumpen mittels einer Produktpumpe (14) von einer Produktquelle durch einen Ventilmechanismus (16) erhält, wobei der Ventilmechanismus (16) eine Öffnung einstellt, durch die das Produkt zum Ausgleichsbehälter (18) in Reaktion auf das Eingangssignal fließt, wobei die Produktpumpe (14) die Durchflussmenge des Produkts in Reaktion auf das Eingangssignal steuert, **dadurch gekennzeichnet, dass** die Steuereinheit (22) dazu ausgelegt ist, das Ausgangssignal der Füllstandssonde (20) zu akzeptieren und das Eingangssignal zu generieren, wobei das Eingangssignal bezeichnend ist für die Geschwindigkeit, mit der die Produktpumpe (14) arbeiten soll, um das Produkt dem Ausgleichsbehälter (18) zuzuführen, wobei das Eingangssignal an einen Steuerungs- bzw. Prozessrechner (28) gesendet wird, der ein Signal an die Produktpumpe (14) sendet, um die Geschwindigkeit der Produktpumpe (14) in Reaktion auf das Eingangssignal von der Füllstandssonde (20) zur Steuereinheit (22) zu steuern.

## Revendications

1. Machine de conditionnement de produit (10) destinée à distribuer un produit liquide dans un conteneur comprenant un réservoir d'équilibre (18) destiné à stocker le produit liquide avant remplissage dudit conteneur à travers un dispositif de remplissage, le réservoir d'équilibre (18) comportant une sonde de niveau (20) destinée à délivrer un signal de sortie à une unité de commande (22), ledit signal de sortie étant représentatif du niveau du produit dans le réservoir d'équilibre (18), ladite unité de commande (22) produisant un signal d'entrée en réponse audit signal de sortie, le réservoir d'équilibre (18) recevant un produit pompé à partir d'une source de produit par une pompe de produit (14) à travers un mécanisme formant vanne (16), ledit mécanisme formant vanne (16) assurant le réglage d'une ouverture à travers laquelle le produit s'écoule vers le réservoir d'équilibre (18) en réponse audit signal d'entrée, la pompe de produit (14) commandant le débit du produit en réponse audit signal d'entrée, **caractérisée en ce que** l'unité de commande (22) est adaptée afin de recevoir le signal de sortie de la sonde de niveau (20) et de produire le signal d'entrée, ledit signal d'entrée étant représentatif de la vitesse à laquelle la pompe de produit (14) doit fonctionner afin de délivrer le produit au réservoir d'équilibre (18), le signal d'entrée étant envoyé à un ordinateur de traitement (28) qui envoie un signal vers la pompe de produit (14) de manière à commander la vitesse de la pompe de produit (14) en réponse au signal d'entrée à partir de la sonde de niveau (20) à l'unité de commande (22).
